Europäisches Patentamt

**European Patent Office**

**Office européen des brevets**

(11) Numéro de publication: **0 259 253 B1**

## (12) FASCICULE DE BREVET EUROPEEN

(45) Date de publication de fascicule du brevet:
**02.01.92**

(21) Numéro de dépôt: **87810463.7**

(22) Date de dépôt: **17.08.87**

(51) Int. Cl.⁵: **G01N 17/00**, G01N 27/30

(54) **Procédé pour la localisation de zones d'ouvrages en béton armé nécessitant réparation.**

(30) Priorité: **29.08.86 CH 3472/86**

(43) Date de publication de la demande:
**09.03.88 Bulletin  88/10**

(45) Mention de la délivrance du brevet:
**02.01.92 Bulletin  92/01**

(84) Etats contractants désignés:
**AT BE CH DE ES FR GB IT LI LU NL SE**

(56) Documents cités:
EP-A- 0 216 628        DE-A- 2 755 644
FR-A- 1 550 326        GB-A- 1 584 506
GB-A- 2 157 441        US-A- 4 209 376

PATENT ABSTRACTS OF JAPAN, vol. 9, no.
90, (P-350)(1813), 19 avril 1985; JP A
59217147

(73) Titulaire: **Miller, John B.**
**Bergtunvn. 9B**
**N-1084 Oslo 10(NO)**

(72) Inventeur: **Miller, John B.**
**Bergtunvn. 9B**
**N-1084 Oslo 10(NO)**

(74) Mandataire: **Vuille, Roman et al**
**c/o KIRKER & Cie S.A. 14, rue du Mont-Blanc**
**Case Postale 872**
**CH-1211 Genève 1(CH)**

EP 0 259 253 B1

## Description

L'invention a pour objet un procédé permettant le contrôle, en permanence ou par intermittence, de l'efficacité des réparations effectuées sur des zones d'ouvrages en béton armé détériorées par la corrosion des éléments métalliques de renforcement pris dans la masse de béton.

La corrosion des éléments métalliques de renforcement utilisés dans la construction d'ouvrages en béton armé provoque, à des degrés divers, la détérioration progressive du béton. A un premier stade, il n'y a pas de phénomène visible. A son stade ultime, cette détérioration se manifeste par l'apparition de fissures à la surface du béton, voire l'éclatement de la masse de béton. Il convient de ne pas attendre un tel stade pour intervenir. La localisation des zones de béton détériorées ou susceptibles d'être détériorées nécessitant une réparation peut être effectuée par une technique non destructrice connue. A l'heure actuelle, il n'existe cependant aucune méthode pour contrôler, en permanence ou par intermittence, l'efficacité des réparations effectuées sur des zones d'ouvrages en béton armé.

La propension des métaux ferreux, l'acier par exemple, à se corroder est connue. Il s'agit d'un processus électronique chimique qui dépend notamment de la concentration en oxygène, de l'humidité et de l'acidité du milieu ambiant, et que l'on peut caractériser par son potentiel électrique. On sait en effet mesurer le potentiel de corrosion de barres d'acier noyées dans du béton en utilisant une électrode de référence telle une électrode au calomel ou du type $Ag/AgCl$ ou $Cu/CuSO_4$.

La demande GB-2.157.441 décrit un dispositif permettant de localiser, à distance et sans destruction préalable de la masse de béton, les zones détériorées par la corrosion des éléments métalliques de renforcement, nécessitant réparation ou traitement préventif, en tirant avantageusement parti de telles mesures du potentiel de corrosion de l'acier.

Grâce à l'invention, il est maintenant aussi possible, en tirant avantageusement parti de telles mesures de potentiel, de contrôler, en permanence ou par intermittence, l'efficacité des réparations effectuées sur des zones d'ouvrages en béton armé, plus précisement par la mise en oeuvre du procédé de la revendication 1.

Les dessins annexés illustrent, à titre d'exemple, une mise en oeuvre du procédé selon l'invention.

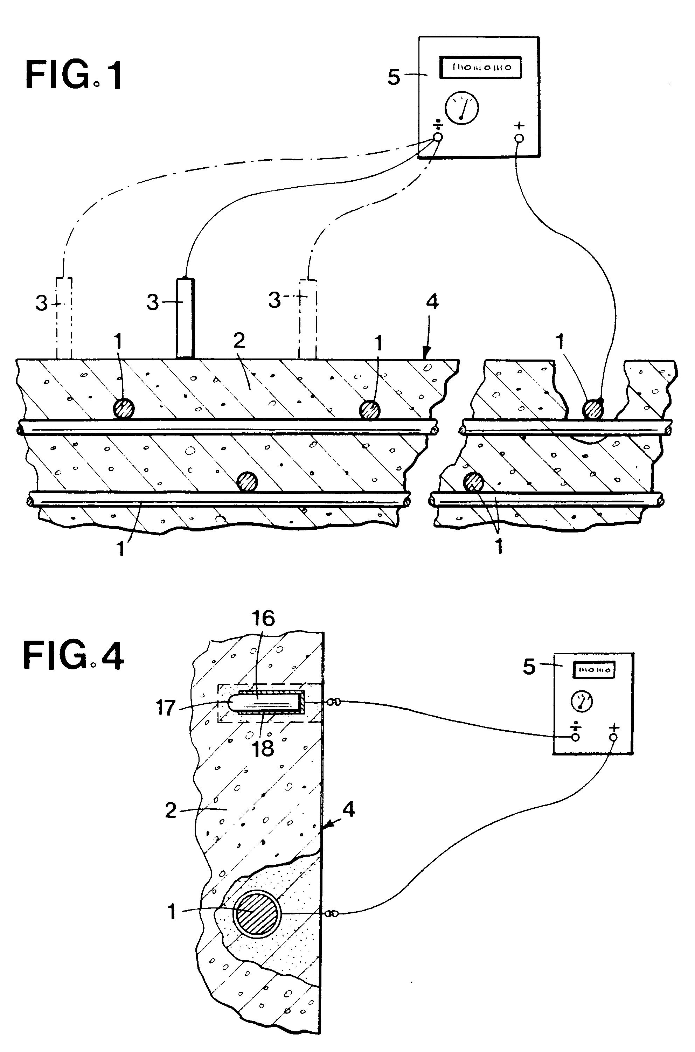

Fig. 1 est une illustration schématique d'un dispositif de type connu, permettant la série de mesures ponctuelles du potentiel électrique conformément au procédé de l'invention.

Fig. 2 est une vue en coupe de l'électrode de référence du dispositif de type connu représenté sur la figure 1

Fig. 3 représente une matrice de potentiels électriques mesurés conformément au procédé de l'invention.

Fig. 4 est une illustration schématique du dispositif comprenant l'électrode de plomb.

Selon l'invention, on procède premièrement à une série de mesures ponctuelles du potentiel électrique du métal des éléments de renforcement 1 pris dans la masse de béton 2, en déplaçant, à intervalles réguliers, une électrode de référence 3, telle une électrode du type $Cu/CuSO_4$ par exemple, à la surface 4 de l'ouvrage considéré. On choisira pour ce faire la surface d'accès le plus aisé, en fonction des conditions de travail : la paroi latérale d'un mur ou d'une fosse, le pourtour d'un pilotis en béton, la face supérieure ou inférieure du tablier d'un pont.

Les mesures seront effectuées au contact de la surface considérée, par exemple tous les mètres, tous les 50 cm ou moins en fonction de la situation rencontrée; en règle générale, on effectuera ces mesures à intervalles réguliers, selon deux axes orthogonaux (x et y par exemple). Ces mesures s'effectuent à l'aide d'un voltmètre usuel 5, de préférence un voltmètre à résistance interne élevée, l'une des bornes dudit voltmètre 5 étant connectée à l'un des éléments métalliques 1 de l'ouvrage, mis à nu ou directement accessible, l'autre borne du voltmètre étant reliée à l'électrode de référence 3. L'électrode 3 peut être déplacée à l'aide de tout moyen adéquat, ou tout simplement à la main; elle sera décrite plus loin dans le détail. L'électrode de référence préférentielle est une électrode de type $Cu/CuSO_4$, mais on peut également utiliser une électrode au calomel ou une électrode du type $Ag/AgCl$.

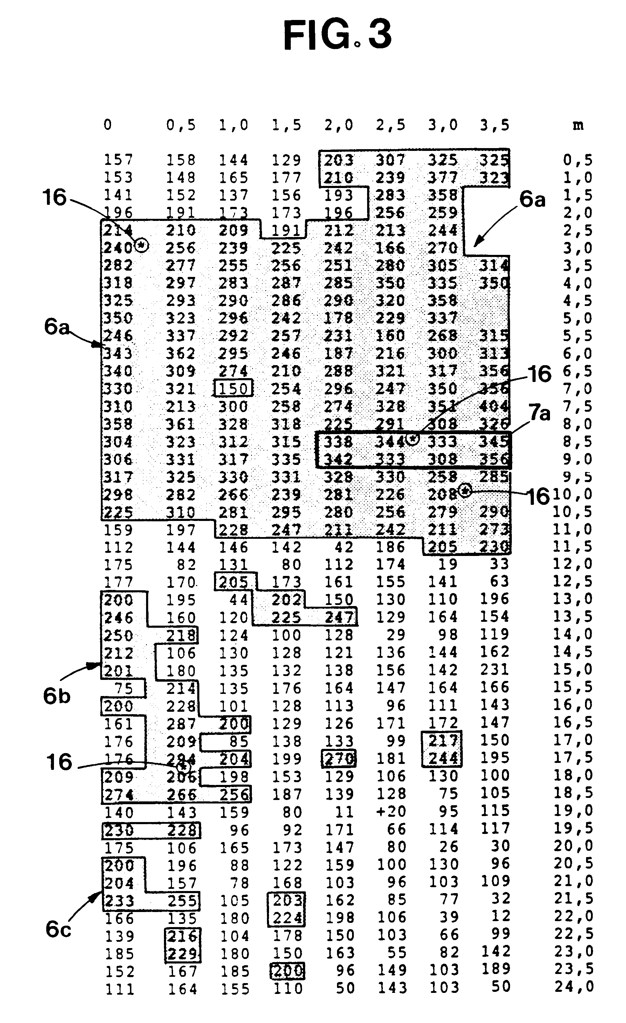

Selon l'invention, on reporte ensuite les mesures effectuées sur tout support approprié, du papier quadrillé par exemple, pour établir une matrice bidimensionnelle telle qu'illustrée par Fig. 3. Une telle matrice comporte des séries de valeurs plus ou moins homogènes par endroits, aussi bien que des zones où les valeurs mesurées varient fortement d'un point à un autre.

Lorsque l'on utilise une électrode de référence 3 du type $Cu/CuSO_4$, on a observé que des barres d'acier 1 prises dans une masse de béton 2 sont exemptes de corrosion lorsque le potentiel électrique mesuré est supérieur à - 200 mV environ, la corrosion du métal faisant son apparition pour un potentiel compris entre - 200 et environ - 300 mV. Pour un potentiel inférieur à - 300 mV, la corrosion est effective. De ce fait, au moyen de la matrice bidimensionnelle mentionnée plus haut, on peut alors délimiter une ou plusieurs zones de surface 6, 6a, 6b, 6c... où le potentiel électronégatif mesuré est inférieur à une valeur limite, - 200 mV en l'occurrence.

Une fois la zone de surface 6, 6a, 6b.. délimitée, on procède en profondeur et à l'intérieur de la zone ci-dessus définie à une ou plusieurs mesures ponctuelles de l'humidité relative de la masse de béton, l'humidité de l'air ambiant étant prise comme valeur de référence. De telles mesures peuvent être effectuées à l'aide de tout moyen usuel, par exemple à l'aide d'une sonde électronique placée dans un trou scellé aménagé dans la masse de béton. On a observé qu'une humidité relative du béton supérieure à 45% créait un milieu propice au développement de la corrosion de l'acier. De telles mesures peuvent être, bien entendu, effectuées à toute profondeur, en fonction de la situation rencontrée.

De ce fait, on détermine les zones de béton à traiter comme suit :
- zones susceptibles d'être détériorées par la corrosion des éléments métalliques de renforcement : potentiel électronégatif mesuré compris entre environ - 200 et env. - 300 mV et humidité relative supérieure à env. 45% (6, 6a, 6b, ...);
- zones détériorées par la corrosion des éléments métalliques de renforcement : potentiel électronégatif mesuré inférieur à env. - 300 mV et humidité relative supérieure à env. 45% (7, 7a, 7b, ...).

Le traitement des zones ainsi-localisées peut être effectué au moyen des techniques usuelles, adaptées aux circonstances rencontrées, notamment en fonction du degré de corrosion métallique et de détérioration du béton rencontré. Selon les cas, ledit traitement sera purement préventif, dans d'autres on effectuera la réparation d'une zone plus ou moins étendue. A titre de traitement on peut citer la protection cathodique, l'enrobage ou l'étanchéification d'une portion de béton, voire le remplacement d'une portion de béton détérioré par du mortier frais combiné ou non à un traitement anti-corrosion des éléments métalliques en cause.

Un traitement aussi bien préventif (zones susceptibles d'être détériorées) que réparateur (zones effectivement détériorées) adapté à de nombreuses situations, consiste à enduire la portion de surface délimitée conformément au procédé de l'invention, ou une portion supérieure à celle-ci, d'un matériau synthétique polymérisé, de préférence étanche à l'eau et à l'air, par exemple une résine époxy ou une résine de polyuréthane.

L'électrode de référence 3 utilisée pour la mise en oeuvre du procédé ci-dessus est du type $Cu/CuSO_4$. Elle se caractérise par le fait qu'elle comprend une électrode centrale 8 en cuivre métallique plongeant dans une solution aqueuse saturée de $CuSO_4$, 9, à son extrémité supérieure 10 une chambre gonflable 11 immergée dans la solution 9 et, à son extrémité inférieure 12, un bouchon poreux 13 en contact avec la solution de CuSO4, 9.

L'électrode 3 comprend également un bouchon étanche 14 à son extrémité supérieure et, bien entendu, un câble de connexion 15 la reliant au voltmètre 5. Grâce à cette disposition originale, le bouchon poreux 13 demeure en permanence imprégné de solution de $CuSO_4$ et l'électrode 3 peut être placée dans toute position sans nuire à la précision de la mesure. On peut ainsi atteindre aisément toute zone de la surface à inspecter.

Selon l'invention, on peut contrôler en permanence, ou par intermittence, l'efficacité des traitements ci-dessus en procédant comme suit : on implante dans la masse de béton 2 une ou plusieurs électrodes de référence 16, on relie chacune desdites électrodes 16 à un appareil de mesure du potentiel électrique 5, lui-même relié à un élément métallique de renforcement 1 pris dans la masse de béton 2. Pour les mesures de potentiel électrique, on utilise de préférence, comme précédemment, un voltmètre 5 à résistance interne élevée. Comme électrode de référence 16, on utilise avantageusement une électrode en plomb que l'on implante, à l'endroit désiré, dans la masse de béton. Sur la Fig. 3, les endroits marqués d'un astérisque (*) situent l'emplacement d'une électrode en plomb 16. Celle-ci est généralement scellée dans la masse de béton par du mortier frais, seule son extrémité 17 étant au contact du béton, la partie restante étant protégée par une matière isolante 18, un enrobage de matière plastique par exemple.

En ce qui concerne la corrosion de l'acier, on a établi les correspondances ci-après quant au potentiel électrique mesuré :

| $Cu/CuSO_4$ | Pb |
|---|---|
| > - 200 mV | > + 515 mV : pas de corrosion |
| - 200 à - 300 mV | + 515 à + 415 mV : corrosion naissante |
| < - 300 mV | < + 415 mV : forte corrosion. |

L'efficacité du traitement appliqué au béton détérioré ou susceptible d'être détérioré sera donc liée à la mesure du potentiel de corrosion : à l'aide d'un tel procédé, on peut par exemple suivre la régression de la corrosion des éléments métalliques dans le temps. On peut également, à l'aide de mesures faites à intervalles réguliers, détecter à temps la nécessité d'un traitement du béton, une fois franchies certaines valeurs limites.

L'exemple ci après illustrera de manière plus concrète l'une des nombreuses applications de l'invention.

### Exemple

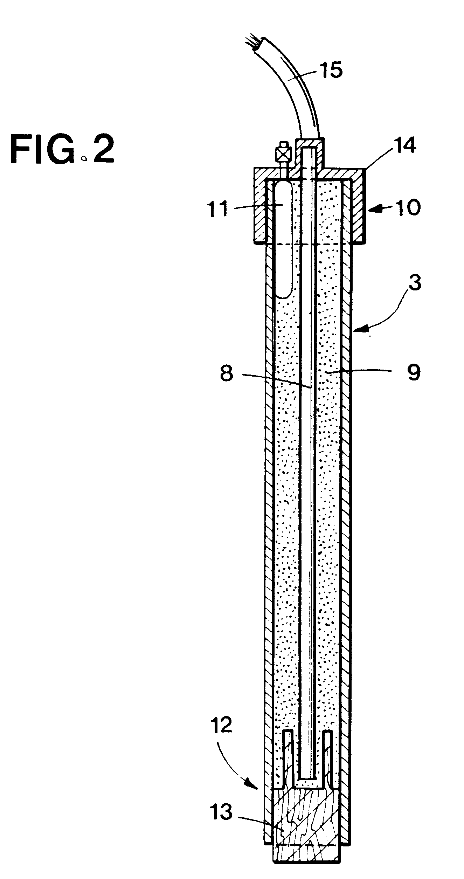

On a procédé à des mesures de potentiel électrique à la surface inférieure du tablier d'un pont en béton armé, à l'aide d'une électrode de référence Cu/CuSO$_4$ telle qu'illustrée par Fig. 2. Les mesures de potentiel ont été effectuées tous les 50 cm selon deux axes orthogonaux et reportées ensuite sur un support en papier. On a ainsi obtenu une matrice représentée par Fig. 3, donnant la répartition des valeurs de potentiel électronégatif relevées (mV).

Les zones ombrées 6a, 6b, 6c,... sont celles où le potentiel mesuré en surface est inférieur à - 200 mV, la zone encadrée 7a étant celle où le potentiel mesuré est inférieur à - 300 mV. Les mesures d'humidité relative faites par sondage à l'intérieur de la zone 6a indiquent une humidité relative de 90%. Il a été d'ailleurs observé que la surface de zone encadrée 7a présentait des craquelures significatives d'une détérioration due à la corrosion du métal des barres de renforcement.

En vue du traitement du béton, on a ensuite implanté quatre électrodes en plomb dans le béton, à l'intérieur de la zone 6a, dont une à l'intérieur de la zone encadrée 7a. La localisation de ces électrodes est donnée par un astérisque (*): le potentiel électrique mesuré est compris entre + 380 mV et + 423 mV, avant traitement.

La zone 6a (potentiel inférieur à - 200 mV) a été enduite d'une résine de polyuréthane et, après quelques jours, les potentiels électriques relevés ont atteint env. + 560 mV. Après que l'on ait encore enduit une surface de béton dépassant la zone 6a, le potentiel mesuré après quelques jours a atteint + 650 mV, signe de l'efficacité du traitement appliqué.

L'expérience montre que de telles mesures de potentiels sont fiables, dans les conditions usuelles, jusqu'à au moins 20 cm env. de profondeur.

## Revendications

1. Procédé pour le contrôle permanent ou intermittent de l'efficacité des réparations effectuées sur des zones d'ouvrages en béton armé, détériorées ou susceptibles d'être détériorées par la corrosion des éléments métalliques de renforcement (1) pris dans la masse de béton (2), ledit procédé comportant les étapes suivantes:

   a) on effectue une série de mesures ponctuelles du potentiel électrique du métal des éléments de renforcement (1) en déplaçant à la surface (4) du béton, au contact de celle-ci, une première électrode de référence (3), lesdites mesures étant effectuées grâce à un appareil (5) de mesure du potentiel électrique relié, d'une part à la première électrode (3) de référence, d'autre part, à un élément métallique (1) de renforcement;

   b) on établit une matrice bidimensionnelle des mesures ponctuelles ainsi effectuées;

   c) on délimite, grâce à cette matrice, une zone de la surface (6a) de béton où le potentiel électrique mesuré est inférieur à une valeur limite donnée;

   d) on implante dans la masse de béton (2) située sous ladite zone de surface (6a) une ou plusieurs deuxièmes électrodes de référence en plomb (16), chacune desdites électrodes (16) étant reliée à un appareil (5) de mesure du potentiel électrique lui-même relié à un élément métallique de renforcement (1);

   e) on procède à une réparation par traitement de ladite zone de surface (6a) et,

   f) on observe l'évolution des potentiels électriques mesurés par lesdites deuxième électrodes (16) en plomb afin d'apprécier l'efficacité du traitement effectué.

2. Procédé selon la revendication 1, caractérisé en ce que les mesures ponctuelles de potentiel avec la première électrode de référence (3) sont effectuées à intervalle régulier selon deux axes orthogonaux.

3. Procédé selon l'une quelconque des revendications 1 ou 2, caractérisé en ce que la première électrode de référence (3) est une électrode du type CuSO$_4$ et en ce que la zone délimitée (6, 6a, 6b..) est celle où le potentiel électronégatif mesuré est inférieur à -200 mV.

4. Procédé selon l'une quelconque des revendications 1 à 3, caractérisé en ce qu'après avoir délimité la zone de surface (6a), on procède en outre à au moins une mesure ponctuelle de l'humidité relative de la masse de béton, l'humidité de l'air ambiant étant prise comme valeur de référence.

5. Procédé selon l'une quelconque des revendications 1 à 4, caractérisé en ce qu'après remise en état du béton de la zone réparée, on enduit la surface des zones ainsi réparées à l'aide d'un matériau synthétique.

6. Procédé selon l'une quelconque des revendications 1 à 5, caractérisé en ce qu'après remise en état du béton de la zone réparée, on enduit une surface supérieure à celle des zones réparées.

## Claims

1. A method of monitoring, continuously or intermittently, the efficacy of repairs made to zones of reinforced concrete structures which have been damaged or are liable to be damaged by corrosion of the metal strengthening elements (1) embedded in the concrete mass (2), said method comprising the following steps:

a) making a series of point measurements of the electrical potential of the metal of the strengthening elements (1) by moving a first reference electrode (3) along the surface (4) of the concrete, in contact with said surface, said measurements being made by means of an instrument (5) for measuring electrical potential, which is connected on the one hand to the first reference electrode (3) and on the other hand to a metal strengthening element (1);

b) setting up a two-dimensional matrix of the point measurements made in this way;

c) using this matrix to delimit a zone of the concrete surface (6a) where the measured electrical potential is below a given limiting value;

d) implanting one or more second reference electrodes (16), made of lead, in the concrete mass (2) located underneath said surface zone (6a), each of said electrodes (16) being connected to an instrument (5) for measuring electrical potential, which is itself connected to a metal strengthening element (1);

e) carrying out a repair by treating said surface zone (6a); and

f) observing the change in the electrical potentials measured by said second lead electrodes (16) in order to assess the efficacy of the treatment carried out.

2. A method according to Claim 1, characterized in that the point measurements of potential with the first reference electrode (3) are made at regular intervals along two orthogonal axes.

3. A method according to Claim 1 or Claim 2, characterized in that the first reference electrode (3) is an electrode of the $CuSO_4$ type and in that the delimited zone (6, 6a, 6b ...) is the zone where the measured electronegative potential is below -200 mV.

4. A method according to any one of Claims 1 to 3, characterized in that, after the surface zone (6a) has been delimited, at least one point measurement of the relative moisture content of the concrete mass is also made, the humidity of the ambient air being taken as a reference value.

5. A method according to any one of Claims 1 to 4, characterized in that, after restoration of the concrete in the repaired zone, the surface of the zones repaired in this way is coated with a synthetic material.

6. A method according to any one of Claims 1 to 5, characterized in that, after restoration of the concrete in the repaired zone, a surface greater than that of the repaired zones is coated.

## Patentansprüche

1. Verfahren zur dauernden oder intermittierenden Kontrolle der Wirksamkeit von Reparaturen, durchgeführt an Stellen von Stahlbetonbauten, die durch Korrosion der metallischen, im Beton (2) eingebetteten Verstärkungselemente (1) beschädigt oder beschädigungsgefährdet sind, bestehend aus den folgenden Schritten:

a) Man macht eine Anzahl punktueller Messungen des elektrischen Potentials der Verstärkungselemente (1) der Oberfläche (4) des Betons dadurch, dass man im Kontakt mit der Oberfläche des Betons eine erste Bezugselektrode (3) verschiebt, wobei die Messungen mit Hilfe eins Gerätes (5) zur Messung des elektrischen Potentials durchgeführt werden, das einerseits an das erste Bezugselement (3), andererseits an ein metallisches Verstärkungselement (1) angeschlossen wird;

b) Man legt sich eine zweidimensionelle Matrix der solcherart durchgeführten Messungen an;

c) Man grenzt mit Hilfe dieser Matrix eine Zone auf der Betonoberfläche (6a) ein, wo das gemessene, elektrische Potential kleiner als ein vorgegebener Grenzwert ist;

d) Man führt in die unter dieser Oberflächenzone (6a) liegende Betonmasse (2) eine oder mehrere zweite Blei-Bezugselektroden (16) ein, wobei jede der Elektroden (16) an ein Gerät (5) zur Messung des elektrischen Potentials angeschlossen wird, das selbst wieder an ein metallisches Verstärkungselement (1) angeschlossen ist;

e) Man führt die Reparatur durch Behandlung der Betonoberfläche (6a) durch, und

f) man beobachtet die Ausbildung des durch die zweiten Bleielektroden (16) gemessenen, elektrischen Potentials, um die Wirksamkeit der durchgeführten Behandlung zu beurteilen.

2. Verfahren nach Patentanspruch 1, dadurch gekennzeichnet, dass die punktuellen Potentialmessungen mit der ersten Bezugselektrode (3) in regelmässigen Abständen gemäss zwei orthogonalen Achsen durchgeführt werden.

3. Verfahren nach einem der Patentansprüche 1 oder 2, dadurch gekennzeichnet, dass die erste Bezugselektrode (3) eine Elektrode vom Typ $CuSO_4$ ist und die eingegrenzte Zone (6, 6a, 6b..) jene ist, deren elektronegatives Potential kleiner als -200 mV ist.

4. Verfahren nach einem der Patentansprüche 1 bis 3, dadurch gekennzeichnet, dass nach Eingrenzen der Oberflächenzone (6a) man ausserdem mindestens eine punktuelle Messung der relativen Feuchtigkeit der Betonmasse macht, wobei die Umgebungsluftfeuchtigkeit als Bezugswert genommen wird.

5. Verfahren nach einem der Patentansprüche 1 bis 4, dadurch gekennzeichnet, dass nach Fertigbehandlung des Betons der reparierten Zone man die Oberfläche der so reparierten Zone mit einem Kunststoff beschichtet.

6. Verfahren nach einem der Patentansprüche 1 bis 5, dadurch gekennzeichnet, dass nach Fertigbehandlung des Betons der reparierten Zone man eine über der Oberfläche der reparierten Zonen liegende Oberfläche beschichtet.

FIG.1

FIG.4

FIG. 2

# FIG. 3

| 0 | 0,5 | 1,0 | 1,5 | 2,0 | 2,5 | 3,0 | 3,5 | m |
|---|---|---|---|---|---|---|---|---|
| 157 | 158 | 144 | 129 | 203 | 307 | 325 | 325 | 0,5 |
| 153 | 148 | 165 | 177 | 210 | 239 | 377 | 323 | 1,0 |
| 141 | 152 | 137 | 156 | 193 | 283 | 358 | | 1,5 |
| 196 | 191 | 173 | 173 | 196 | 256 | 259 | | 2,0 |
| 214 | 210 | 209 | 191 | 212 | 213 | 244 | | 2,5 |
| 240 | 256 | 239 | 225 | 242 | 166 | 270 | | 3,0 |
| 282 | 277 | 255 | 256 | 251 | 280 | 305 | 314 | 3,5 |
| 318 | 297 | 283 | 287 | 285 | 350 | 335 | 350 | 4,0 |
| 325 | 293 | 290 | 286 | 290 | 320 | 358 | | 4,5 |
| 350 | 323 | 296 | 242 | 178 | 229 | 337 | | 5,0 |
| 246 | 337 | 292 | 257 | 231 | 160 | 268 | 315 | 5,5 |
| 343 | 362 | 295 | 246 | 187 | 216 | 300 | 313 | 6,0 |
| 340 | 309 | 274 | 210 | 288 | 321 | 317 | 356 | 6,5 |
| 330 | 321 | 150 | 254 | 296 | 247 | 350 | 356 | 7,0 |
| 310 | 213 | 300 | 258 | 274 | 328 | 351 | 404 | 7,5 |
| 358 | 361 | 328 | 318 | 225 | 291 | 308 | 326 | 8,0 |
| 304 | 323 | 312 | 315 | 338 | 344 | 333 | 345 | 8,5 |
| 306 | 331 | 317 | 335 | 342 | 333 | 308 | 356 | 9,0 |
| 317 | 325 | 330 | 331 | 328 | 330 | 258 | 285 | 9,5 |
| 298 | 282 | 266 | 239 | 281 | 226 | 208 | | 10,0 |
| 225 | 310 | 281 | 295 | 280 | 256 | 279 | 290 | 10,5 |
| 159 | 197 | 228 | 247 | 211 | 242 | 211 | 273 | 11,0 |
| 112 | 144 | 146 | 142 | 42 | 186 | 205 | 230 | 11,5 |
| 175 | 82 | 131 | 80 | 112 | 174 | 19 | 33 | 12,0 |
| 177 | 170 | 205 | 173 | 161 | 155 | 141 | 63 | 12,5 |
| 200 | 195 | 44 | 202 | 150 | 130 | 110 | 196 | 13,0 |
| 246 | 160 | 120 | 225 | 247 | 129 | 164 | 154 | 13,5 |
| 250 | 218 | 124 | 100 | 128 | 29 | 98 | 119 | 14,0 |
| 212 | 106 | 130 | 128 | 121 | 136 | 144 | 162 | 14,5 |
| 201 | 180 | 135 | 132 | 138 | 156 | 142 | 231 | 15,0 |
| 75 | 214 | 135 | 176 | 164 | 147 | 164 | 166 | 15,5 |
| 200 | 228 | 101 | 128 | 113 | 96 | 111 | 143 | 16,0 |
| 161 | 287 | 200 | 129 | 126 | 171 | 172 | 147 | 16,5 |
| 176 | 209 | 85 | 138 | 133 | 99 | 217 | 150 | 17,0 |
| 176 | 284 | 204 | 199 | 270 | 181 | 244 | 195 | 17,5 |
| 209 | 206 | 198 | 153 | 129 | 106 | 130 | 100 | 18,0 |
| 274 | 266 | 256 | 187 | 139 | 128 | 75 | 105 | 18,5 |
| 140 | 143 | 159 | 80 | 11 | +20 | 95 | 115 | 19,0 |
| 230 | 228 | 96 | 92 | 171 | 66 | 114 | 117 | 19,5 |
| 175 | 106 | 165 | 173 | 147 | 80 | 26 | 30 | 20,0 |
| 200 | 196 | 88 | 122 | 159 | 100 | 130 | 96 | 20,5 |
| 204 | 157 | 78 | 168 | 103 | 96 | 103 | 109 | 21,0 |
| 233 | 255 | 105 | 203 | 162 | 85 | 77 | 32 | 21,5 |
| 166 | 135 | 180 | 224 | 198 | 106 | 39 | 12 | 22,0 |
| 139 | 216 | 104 | 178 | 150 | 103 | 66 | 99 | 22,5 |
| 185 | 229 | 180 | 150 | 163 | 55 | 82 | 142 | 23,0 |
| 152 | 167 | 185 | 200 | 96 | 149 | 103 | 189 | 23,5 |
| 111 | 164 | 155 | 110 | 50 | 143 | 103 | 50 | 24,0 |

16    6a    6a    16    7a    16    6b    6c